Europäisches Patentamt

European Patent Office

Office européen des brevets

(11) Veröffentlichungsnummer: **0 297 400 B1**

(12) **EUROPÄISCHE PATENTSCHRIFT**

(45) Veröffentlichungstag der Patentschrift: **17.06.92**

(51) Int. Cl.⁵: **A47B 17/00**, F16B 12/52

(21) Anmeldenummer: **88109848.7**

(22) Anmeldetag: **21.06.88**

(54) **Büro-Arbeitsplatz.**

(30) Priorität: **23.06.87 DE 3720639**

(43) Veröffentlichungstag der Anmeldung:
**04.01.89 Patentblatt 89/01**

(45) Bekanntmachung des Hinweises auf die
Patenterteilung:
**17.06.92 Patentblatt 92/25**

(84) Benannte Vertragsstaaten:
**AT BE CH DE ES FR GB GR IT LI LU NL SE**

(56) Entgegenhaltungen:
**EP-A- 0 152 987**
**GB-A- 2 156 206**

(73) Patentinhaber: **Eggersmann GmbH & Co. KG.**
**Königsberger Strasse 2**
**W-4992 Espelkamp(DE)**

(72) Erfinder: **Moll, Reiner**
**Täferroter Strasse 28**
**W-7070 Schwäb. Gmünd-Lindach(DE)**
Erfinder: **Utz, Andreas**
**Brunnenweg 17**
**W-7071 Spraitbach(DE)**

(74) Vertreter: **Schroeter, Helmut et al**
**Schroeter, Fleuchaus, Lehmann Wehser,**
**Holzer & Gallo Patentanwälte Wolfratshauser**
**Strasse 145 Postfach 71 03 50**
**W-8000 München 71(DE)**

Rank Xerox (UK) Business Services

## Beschreibung

Die Erfindung bezieht sich auf einen Büro-Arbeitsplatz mit den in den Oberbegriffen der Ansprüche 1, 5 und 9 genannten Merkmalen. Dergleichen ist aus der EP - A2 - 123 972 bekannt.

Durch die Erfindung nach Anspruch 1 soll der Büro-Arbeitsplatz so ausgestaltet werden, daß weitere Arbeitsplatten, die seitlich an die Tischplatte anzusetzen sind, nicht nur seitwärts sondern auch vorwärts ragen, so daß sie vom Benutzer gut zu erreichen sind. Das Untergestell soll auf sehr einfache und Zeit sparende Weise zu erweitern sein, wobei dafür gesorgt werden soll, daß sich Kabel auf sehr einfache Weise durch die einzelnen Bauteile führen lassen, so daß die Kabelführung auch bei einem Umbau schnell geändert werden kann.

Das Untergestell soll bei Bedarf direkt mit einem Obergestell zu verbinden sein, das Zusatzteile wie Ablagebretter und ähnliches tragen kann.

Auf der Tischplatte stehende Geräte mit Stromzufuhr sollen sich so an eine Stromquelle anschließen lassen, daß sich auf der Tischplatte nur sehr kurze Kabelstücke befinden und daß keine Kabel über die Ränder der Tischplatte nach unten hängen.

Begriffe wie "vorn", "hinten", "oben", "unten" beziehen sich immer auf den Arbeitsplatz in Gebrauchsstellung aus der Sicht des vor der Tischplatte sitzenden Benutzers.

Die oben genannte Aufgabe wird durch die Erfindung gemäß Anspruch 1 gelöst.

Die Schrägkante, die eine Länge von mindestens 30 cm, üblicherweise etwa 45 cm, hat, dient zum Ansetzen weiterer Platten, so daß sich bei gleicher Höhenlage eine durchgehende Arbeitsfläche ergibt, wobei eine Ansatzplatte nach seitwärts und vorwärts ragt.

Die hohlen Knotenkörper mit ihren großen Durchtrittsöffnungen und die zugehörigen Stützen und Hohlbalken erleichtern den Um- und Ausbau des Arbeitsplatzes sowie die Durchführung von Kabeln.

Die EP - A1 - 152 987 zeigt zwar schon die Ausbildung von quaderförmigen hohlen Knotenkörpern mit Durchtrittsöffnungen für Kabel, jedoch für ein anderes Gebiet von Möbeln, nämlich Schaukästen. Dieses Anwendungsgebiet steht dem der vorliegenden Erfindung fern. Außerdem betrifft die Schrift nur die Merkmale f und g von Anspruch 1.

Entsprechend der Schrägkante kann einer der Hohlbalken abgewinkelt sein, derart, daß sein freies Ende rechtwinklig unter der Schrägkante vorsteht und zum Tragen weiterer Ansatzteile dienen kann.

Weiterbildungen der Erfindung nach Anspruch 1 ergeben sich aus den abhängigen Ansprüchen 2 bis 4.

Die Schrägkante kann unter einem Winkel von etwa 135° zur Vorderkante der Tischplatte verlaufen, wodurch sich eine für den Benutzer günstige Lage an der Ansatzplatte ergibt.

Im Untergestell bilden vorzugsweise die Hohlbalken eine rückwärtige Verbindung und seitliche Verbindungen zwischen den Stützen, während die Kabelkanäle durch die Hohlbalken und die Knotenkörper sowie neben den Stützen, aber zwischen diesen und zugehörigen Abdeckblechen verlaufen.

Um dem Benutzer bequemen Zugang zu den Kabelkanälen zu verschaffen, kann je eine lotrechte Wand der Hohlbalken als Klappe ausgebildet sein, die um eine waagerechte Achse schwenkbar ist, wobei vorzugsweise die lotrechte Wand in nahezu ihrer ganzen Höhe die Klappe bildet. Hierbei kann die Klappe um ein zweiteiliges Gelenk schwenkbar sein, von dem der eine Gelenkteil einstückig mit der Klappe, der andere einstückig mit dem Hauptteil des Hohlbalkens ausgebildet ist.

Entspechend dem unabhängigen Anspruch 5 betrifft die Erfindung eine Variante, bei der die Knotenkörper einen im wesentlichen quadratischen Querschnitt haben sowie unter 45° zu ihren Seitenwänden geneigte schmale Eckflächen. Die Abdeckplatten und die Verbindungsplatten haben unter 135° zu ihren Hauptebenen angeformte Laschen, die es ermöglichen, die Knotenkörper mit Abdeckplatten und Verbindungsplatten zusammenzufügen, die alle vier Seiten der Knotenkörper bedecken. Die Laschen zum Anbringen der Abdeckplatten sind in der Höhe versetzt angeordnet, so daß zwei über eine Ecke angesetzte Abdeckplatten oder Ansatzplatten die Eckflächen schließen. Diese Variante ist unabhängig davon, ob gemäß Anspruch 1 die Tischplatte eine Schrägkante hat und ob einer der Hohlbalken entsprechend abgewinkelt ist.

Gemäß einer Weiterbildung nach Anspruch 6 dieser Variante der Erfindung können rahmenartige Verbindungsplatten zum Befestigen der Knotenkörper an den Enden der Hohlbalken dienen und Abdeckplatten die freibleibenden Seiten der Knotenkörper verschließen.

Entsprechend dem unabhängigen Anspruch 9 lassen sich die Knotenkörper aus Einzelteilen zusammensetzen, nämlich einer Bodenplatte, einer Deckplatte und dazwischen einzufügenden Seitenwänden, nämlich geschlossenen Seitenwänden und/oder offenen Seitenwänden zum Durchführen von Kabeln.

Oben auf den Knotenkörpern lassen sich nach Anspruch 16 Höheneinstellvorrichtungen unterbringen, von denen ein Teil in eine der Öffnungen der Tischplatte greift. Die Höheneinstellvorrichtungen können nach Anspruch 19 zusätzlich die Möglichkeit bieten, das Obergestell durch die Öffnungen der Tischplatte einzustecken und zu befestigen, wobei das Obergestell aber seine Höhenlage trotz Höhenverstellungen der Tischplatte unverändert beibehält.

Gemäß Weiterbildungen der Varianten nach den Ansprüchen 1, 5 oder 9 können Tragarme des Obergestells lotrecht stehend und gerade sein oder nach Anspuch 20 die Form von Viertel-Kreisbögen haben, nämlich von den Öffnungen innerhalb der Tischplatte aufwärts und rückwärts verlaufen. Das Obergestell kann eine Vielzahl von Zusatzteilen aufnehmen.

Ausführungsbeispiele mit weiteren Merkmalen der Erfindung werden im folgenden anhand der Zeichnungen beschrieben.

Figur 1
zeigt perspektivisch einen Büro-Arbeitsplatz nach der Erfindung.

Figur 2
zeigt perspektivisch in Explosivdarstellung Untergestell und Obergestell sowie einige Ansatzteile eines ähnlichen Büro-Arbeitsplatzes.

Figur 3 und 4
sind Explosivdarstellungen von zwei Varianten eines Büro-Arbeitsplatzes bzw. Teilen davon.

Figur 5
ist eine Draufsicht auf die linke Seite einer Tischplatte mit dreieckiger Ansatzplatte.

Figur 6
zeigt perspektivisch die linke Seite eines Büro-Arbeitsplatzes mit Ansatzplatte und Ansatzschränken.

Figur 7
zeigt in Seitenansicht von rechts einen Büro-Arbeitsplatz.

Figur 8
zeigt perspektivisch eine Tischplatte mit Obergestell, sowie Zusatzteile.

Figur 9
zeigt perspektivisch ein Stück eine Hohlbalkens des Obergestells mit anzusetzenden Teilen.

Figur 10
zeigt einen Hohlbalken im Querschnitt.

Figur 10a
zeigt eine Einzelheit des Hohlbalkens.

Figur 11
zeigt in Explosivdarstellung Teile eines Untergestells mit einem Knotenkörper und einem Hohlbalken einer ersten Ausführungsform sowie einer Höheneinstellvorrichtung und einem Teil der Tischplatte.

Figur 12 und 13
zeigen zwei Ansichten einer Verbindungsplatte.

Figur 14
zeigt einen Hohlbalken einer zweiten Ausführrungsform in Seitenansicht.

Figur 15
ist ein Detail der Klappe des Hohlbalkens im Querschnitt.

Figur 16
zeigt in lotrechtem Schnitt einen Knotenkörper der ersten Ausführungsform mit Höheneinstellvorrichtung und der Tischplatte, links in ihrer niedrigsten, rechts in ihrer höchsten Einstellung.

Figur 17
zeigt teilweise im Schnitt eine Draufsicht auf diesen Knotenkörper mit Höheneinstellvorrichtung.

Figur 18
zeigt in Explosivdarstellung eine Wandkontaktplatte, eine Verbindungsplatte und ein Ende eines Hohlbalkens.

Figur 19
zeigt einen Abdeckteller für eine der Öffnungen der Tischplatte.

Figur 20
zeigt einen Ringkörper zum Haltern des Abdecktellers innerhalb der Öffnung.

Figur 21
zeigt ein Stück vom unteren Ende eines der Tragarme des Obergestells.

Figur 22
zeigt in Explosivdarstellung eine zweite Ausführrungsform von Stütze, Knotenkörper und Hohlbalken.

Figur 23
zeigt eine Seitenwand dieses Knotenkörpers in Draufsicht.

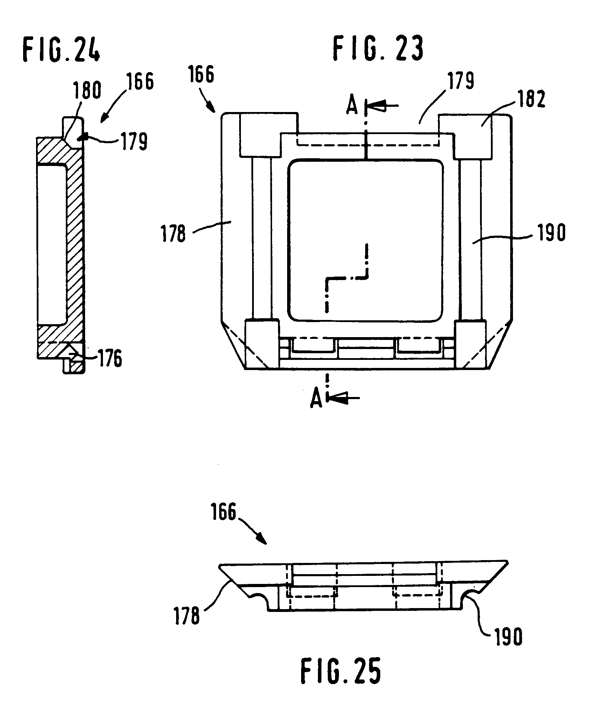

Figur 24
ist ein Querschnitt nach Linie A - A in Figur 23.

Figur 25
ist eine Ansicht der Seitenwand von oben.

Der Büro-Arbeitsplatz mit Ansatzteilen

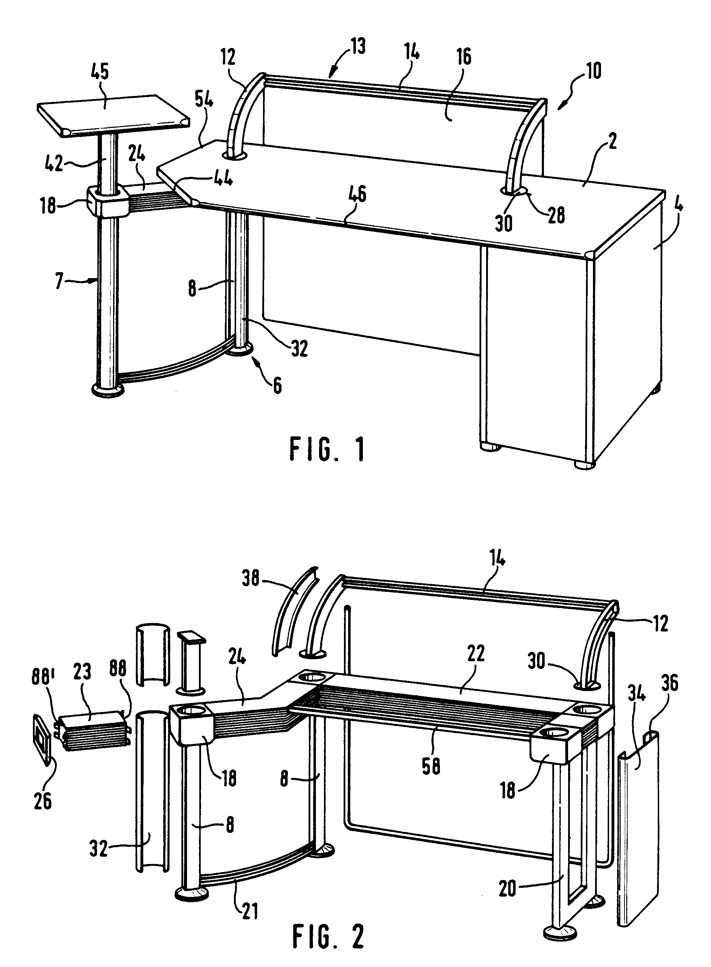

Figur 1 zeigt einen Büro-Arbeitsplatz mit einer Tischplatte 2, einem Unterschrank 4, einem Untergestell 6 mit Bienen 7 und einem Obergestell 10 mit Tragarmen 12, die nach rückwärts gebogen sind. Zwischen den oberen Enden zweier Tragarme 12 ist ein Träger 13 in Form zweier paralleler Rohre 14 angebracht, die eine als Sichtschutz dienende Wand 16 tragen können.

Wie Figur 2 im einzelnen zeigt, stellen Knotenkörper 18 die Verbindungen her zwischen einfachen Stützen 8 in Form von Rohren von rechteckigem Querschitt, die die tragenden Teile der Beine 7 bilden (oder von U-förmigen Stützen 20), geraden Hohlbalken 22 und einem gewinkelten Hohlbalken 24. Die unteren Enden der Beine 7 sind durch Rohre 21 miteinander verbunden. An den äußersten linken Knotenkörper in Figur 2 läßt sich ein kurzer Hohlbalken 23 ansetzen, der mit Hilfe einer Wandkontaktplatte 26 mit einer Wand zu verbinden ist.

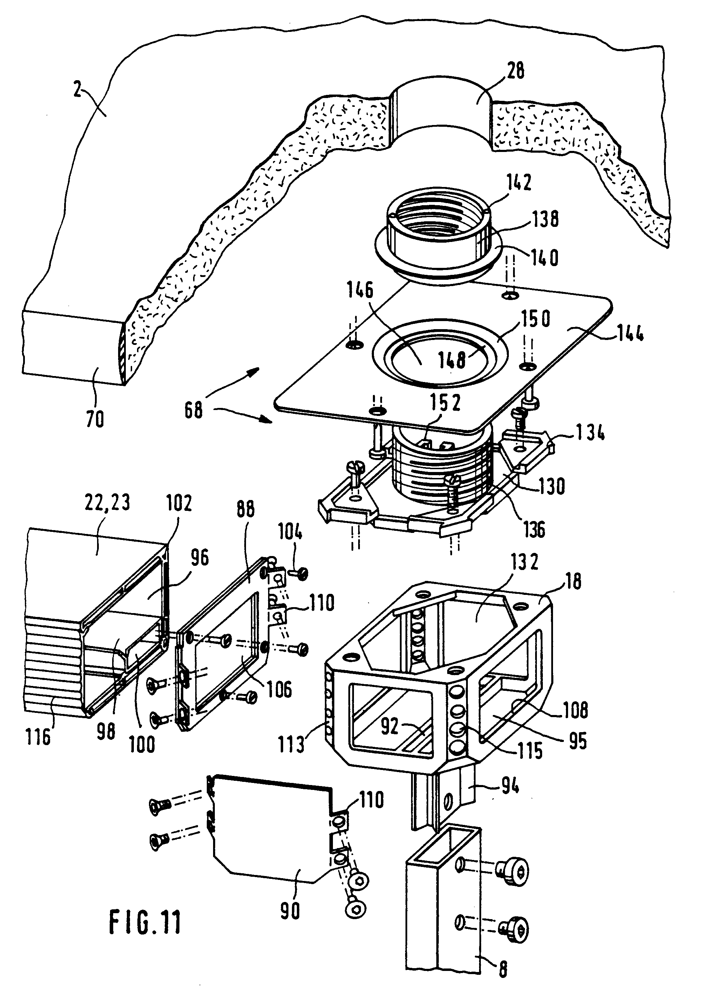

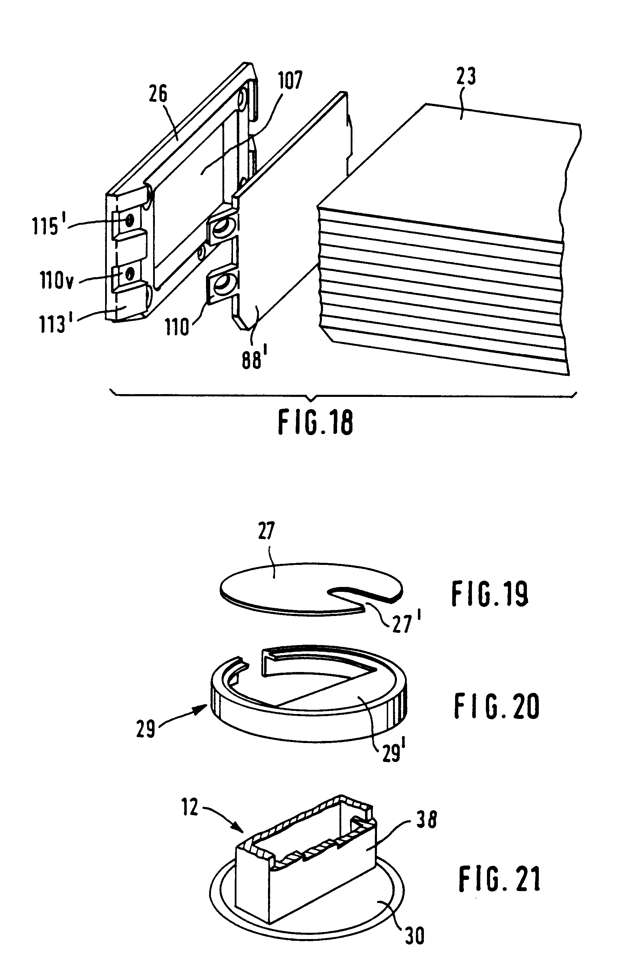

Die Knotenkörper 18 haben einen im wesentlichen quadratischen waagerechten Querschnitt, so daß von allen Seiten Hohlbalken 22, 23, 24 gleicher Querschnitte ansetzbar sind. Oben haben die Knotenkörper eine relativ große Öffnung, die zur Durchführung von Kabeln und zur Aufnahme einer Höheneinstellvorrichtung für die Tischplatte 2 dient. Die Tischplatte 2 hat zylindrische Öffnungen 28 (Figur 1), deren Lage den Öffnungen der beiden hinteren Knotenkörper 18 in Figur 2 entspricht. Kabel lassen sich durch diese Öffnungen 28 zu auf der Tischplatte stehenden Geräten (z.B. Telefon, Rechenmaschine) führen. Sind keine Tragarme 12 eingesetzt, so werden die Öffnungen 28 durch Abdeckteller 27 (Figur 19) bis auf einem Kabeldurchlass 27′ geschlossen. Jeder Abdeckteller ist auf einem federnden Ringkörper 29 (Figur 20), der über seinen Außenrand schnappt, drehbar gehaltert. Der Ringkörper hat einen Abschnitt 29′, der bei entsprechender Drehstellung von unten her den Kabeldurchlaß verschließt, wenn keine Kabel durchzuführen sind. Der Ringkörper 29 ist innerhalb der Öffnung 28 oberhalb einer noch zu beschreibenden Höheneinstellvorrichtung (Figur 11) untergebracht.

Die Tragarme 12 sind im Querschnitt U-förmig (Figuren 1 und 21) und lassen sich durch gekrümmte Abdeckbleche 38 zu Kabelkanälen schließen. Sind Tragarme 12 eingesetzt, so können Kabel durch die Öffnungen 28 in die Tragarme und außerdem auf die Tischplatte geführt werden.

Die unteren Enden der Tragarme 12 greifen mit Laschen, die in Figur 2 nicht dargestellt sind, durch die Höheneinstellvorrichtungen in die Knotenkörper 18 ein und lassen sich dadurch am Untergestell befestigen. Unabhängig von Änderungen der Höhenlage der Tischplatte 2 behalten die Tragarme und die von ihnen getragenen Teile ihre Höhenlage unverändert bei. An ihrem unteren Ende haben die Tragarme Abdeckscheiben 30 zum Verschließen der Öffnungen 28 der Tischplatte.

Waagerechte Kabelkanäle werden durch die Innenräume der Hohlbalken 22, 23 und 24 gebildet und setzen sich durch die Knotenkörper 18 hindurch fort. Die Stützen 8 der Beine 7 haben einen rechteckigen, flachen Querschnitt (vgl. Figur 11). Lotrechte Kabelkanäle werden dadurch gebildet, daß zwei rinnenförmige Abdeckbleche 32 mit ihren Rändern über die lotrechten Schmalseiten der Stützen 8 geschnappt werden, so daß zwischen der Stütze und den Abdeckblechen zwei Leerräume zur Aufnahme der Kabel gebildet werden.

Die U-förmige Stütze 20 läßt sich durch zwei Abdeckbleche 34 schließen (von denen nur das rechte dargestellt ist), deren Hauptflächen eben sind und die gewölbte Randteile 36 haben. Die Außenkante des hinteren Randteils läßt sich durch ein Scharnier an der schmalen Rückseite der Stütze 20 anbringen, die Außenkante des vorderen Randteils an der schmalen Vorderseite der Stütze einschnappen. So entsteht ein Kabelschrank, der zur Aufnahme von Mehrfachsteckdosen, Transformatoren und großer Mengen von Restkabel (der nicht benötigte Teil zu langer Kabel) dienen kann.

Knotenkörper 18 dienen nicht nur zur Verbindung zwischen Hohlbalken und Stützen, sondern können auch zur Halterung eines nach oben ragenden Beines 42 für ein Ablagebrett 45 dienen (Figur 1). Dieses Bein kann in der gleichen Weise gebildet sein wie die Beine 7, hat aber eine geringere Höhe als diese.

Die Tischplatte 2 hat vorne links eine Schrägkante 44. Diese Schrägkante verläuft unter einem Winkel von 135° zur Vorderkante 46 der Tischplatte. Dementsprechend beschreibt der Hohlbalken 24 einen Winkel von ebenfalls 135°. Sein in Figur 1 freies Ende steht also rechtwinklig unter der Schrägkante 44 hervor. Eine Schrägkante kann stattdessen oder zusätzlich an der rechten Seite einer Tischplatte vorgesehen sein, die dann allerdings kürzer ist als die in Figur 1 dargestellte. Die Schrägkante hat typisch eine Länge von etwa 45 cm.

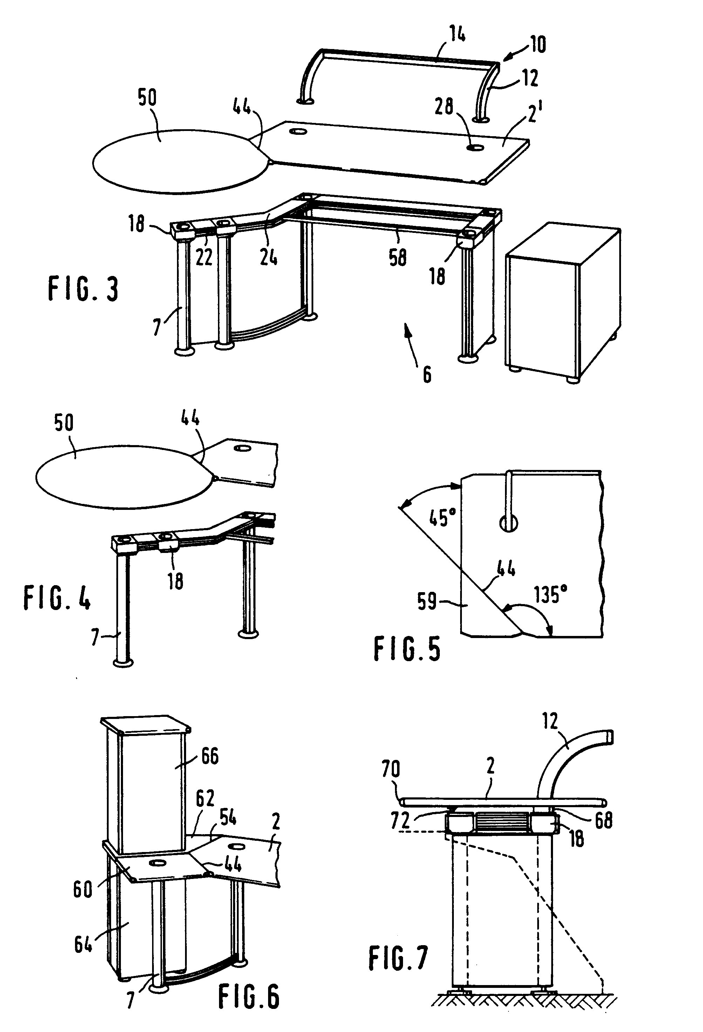

Die Figuren 3 und 4 zeigen weitere Gestaltungsmöglichkeiten unter Verwendung einer Tischplatte, die links eine Schrägkante 44 hat und eines gewinkelten Hohlbalkens 24. Nach Figur 3 sind links zwei Beine 7 vorgesehen, die durch einen kurzen geraden Hohlbalken 22 miteinander verbunden sind. Das linke vordere Ende des Hohlbalkens 24, zwei Knotenkörper 18 und der Hohlbalken 22 dienen zur Unterstützung einer im wesentlichen kreisförmigen Ansatzplatte 50. Nach Figur 4 ist nur ganz außen ein einziges Bein 7 vorgesehen, so daß einer der Knotenkörper 18 freitragend zwischen Hohlbalken angeordnet ist.

Wie Figur 5 zeigt, kann man eine im wesentlichen rechteckige Tischplatte durch Anfügen einer etwa dreieckigen Ansatzplatte 59 an die Schrägkante 44 erhalten.

Figur 6 zeigt weitere Ansatzmöglichkeiten. An der Schrägkante 44 setzt eine im wesentlichen quadratische Ansatzplatte 60 an. In den rückwärtigen Raum zwischen der Hinterkante der Ansatzplatte 60 und der linken Seitenkante der Tischplatte 2 ist ein Ansatzplatte 62 eingefügt, deren dem Benutzer zugekehrte Kanten einen Winkel von ebenfalls 135° einschließen, während ihre hintere Kante abgerundet ist. Unterhalb dieser Ansatzplatte 62 befindet sich ein Unterschrank 64, darüber ein Oberschrank 66.

Wie Figur 7 zeigt, ist zwischen einem rückwärtigen Knotenkörper 18 und der Tischplatte 2 eine Höheneinstellvorrichtung 68 vorgesehen. Das untere Ende des Tragarmes 12 greift durch die Tischplatte hindurch in die Höheneinstellvorrichtung ein. Hinter der Vorderkante 70 der Tischplatte sind einfache Höheneinstellelemente 72 vorgesehen.

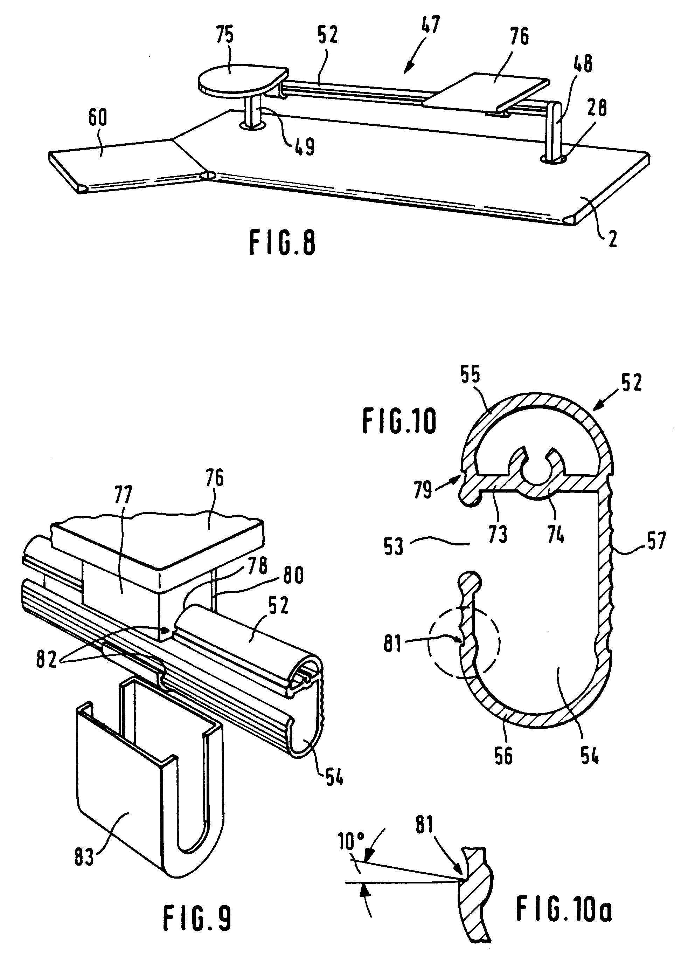

Figur 8 zeigt perspektivisch eine Tischplatte 2 mit quadratischer Ansatzplatte 60 und einem Obergestell 47. In die beiden Öffnungen 28 der Tischplatte sind zwei lotrechte Tragarme 48 fest eingesetzt, die einen U-förmigen Querschnitt haben und Kabelkanäle darstellen. Die Tragarme sind mit ihren offenen Seiten (der U-förmigen Querschnitte) gegeneinandergekehrt und mit je einem Abdeckblech 49 geschlossen.

Zwischen den oberen Enden beider Tragarme 48 ist ein Träger 13 in Form eines Hohlbalkens 52 angebracht, den Figur 10 im Querschnitt und Figur 9 perspektivisch darstellen. Der Hohlbalken hat einen nach vorne offenen Schlitz 53, der zum Einführen von Kabeln dient. Der untere Teil des Hohlbalkens dient als Kabelkanal 54. Der Hohlbalken ist aus Aluminium oder einer Aluminiumlegierung stranggepreßt. Er hat oben und unten je eine Wand 55, 56 in Form eines hablen Hohlzylinders und eine ebene, außen gerippte Rückwand 57. Der obere Hohlraum des Hohlbalkens 52 ist durch eine waagerechte Platte 73 abgesperrt. Die Platte ist einteilig mit einem oben offenen Rohr 74 ausgebildet, dessen Enden dazu dienen, selbstschneidende Schrauben aufzunehmen, die zum Befestigen des Hohlbalkens 52 zwischen den Tragarmen 48 dienen. Die Enden des Hohlbalkens 52 greifen in die oberen Enden der beiden Tragarme 48 ein. Nicht dargestllte Aussparungen in der Wand 56 an den Enden des Hohlbalkens dienen zum Durchführen von Kabeln aus den Tragarmen 48 in den Hohlbalken 52. Durch ihren U-förmigen Querschnitt umgreifen die Tragarme die beiden Enden des Hohlbalkens und sichern den Hohlbalken dadurch gegen Verdrehung um eine waagerechte Achse.

Der Hohlbalken 52 dient zum Tragen einer Vielzahl verschiedener Zusatzteile, von denen hier lediglich zwei unterschiedlich geformte Ablagebretter 75, 76 dargestellt sind. Wie Figur 9 zeigt, ist an der Unterseite des Ablagebrettes 76 (oder jedes anderen Zusatzteiles) eine Stütze 77 befestigt, die unten eine halbzylindrische Ausnehmung 78 hat und damit auf der oberen Wand 55 des Hohlbalkens 52 ruht. Diese Wand hat an ihren beiden unteren Rändern je eine Hinterschneidung 79. Figur 10a zeigt vergrößert die Form einer solchen Hinterschneidung. Ihre obere Fläche hat einen hier übertrieben groß dargestellten Winkel von 10° gegenüber einer waagerechten Ebene. Die unteren inneren Ränder der Stütze 77 haben dazu passend geformte Klauen 82, die in die Hinterschneidungen 79 greifen und damit die Stütze 77 in unveränderlicher Orientierung am Hohlbalken festhalten. Die Stütze 77 wird in Längsrichtung auf den Hohlbalken geschoben. Ferner ist eine Klammer 80 in Gestalt eines gebogenen Bleches vorgesehen, deren oberer Teil eben ist und an der Rückseite der Stütze 77 durch Schrauben befestigt wird, während ihr unterer Teil halbzylindrisch gebogen ist und mit Klauen 82 in Hinterschneidungen 81 eingreift, die vorn und hinten am Hohlbalken oberhalb dessen unterer Wand 56 vorgesehen sind.

Zum Befestigen eines Zusatzteiles, wie des Ablagebrettes 76, wird also zunächst die Stütze 77 in Längsrichtung auf den Hohlbalken 52 geschoben, wobei ihre unteren Klauen 82 hinter die Hinterschneidungen 79 schnappen. Dann wird die Klammer 80 von unten her so angesetzt, daß ihre vordere Klaue 82 und eine entsprechende rückwärtige Klaue in die beiden unteren Hinterschneidungen 81 des Hohlbalkens greifen. Anschließend wird der obere ebene Abschnitt der Klammer 80 an der Rückseite der Stütze 77 festgeschraubt.

Zum Schluß wird von unten her eine hohle Abdeckung 83 über Hohlbalken 52, Stütze 77 und Klammer 80 geschoben, wo sie unter Reibung und Spannung von selbst festhält.

Kabel, die von unten her durch die Öffnungen 28 der Tischplatte hochgeführt werden, werden in den Innenraum der Tragarme 48 und dann in den Kabelkanal 54 des Hohlbalkens gelegt. Sie können an jeder beliebigen Stelle des Hohlbalkens durch den Schlitz 53 nach außen geführt werden.

Erste Ausführungsform von Knotenkörper und Hohlbalken

Figur 11 zeigt in Explosivdarstellung ein Stück der Tischplatte 2 mit ihrer rechten zylindrischen Öffnung 28. Darunter erkennt man die Höheneinstellvorrichtung 68, darunter einen Knotenkörper 18 und darunter das obere Ende einer Stütze 8. Links vom Knotenkörper sind das rechte Ende eines Hohlbalkens 22 und zwischen beiden eine Verbindungsplatte 88 zu sehen. Die vordere Öffnung das Knotenkörpers 18 läßt sich durch eine Abdeckplatte 90 verschließen. Der Knotenkörper hat unten einen Querträger 92, an dem nach unten ein Steckfuß 94 zum Einsetzen in die Stütze 8 befestigt ist. Beiderseits des Querträgers befinden sich Öffnungen 95 ausreichender Größe zum Durchstecken von Kabeln mit ihren Anschlußteilen.

Der Hohlbalken 22 (Figur 11) ist im Spritzguß aus Leichtmetall hergestellt und hat oben, hinten und unten doppelte Wände, die seine Stabilität bei geringstmöglichem Materialaufwand gewährleisten. Er bildet einen Haupt-Kabelkanal 96, innerhalb dessen durch einen Einsetzteil 98 ein innerer Kabelkanal 100 für Telekommunikationsleitungen abgeteilt ist. Der Hohlbalken 22 hat in seinen Ecken Löcher 102, die zum Anbringen der Verbindungsplatte 88 dienen. Die Platte wird mit selbstschneidenden Schrauben 104 angeschraubt.

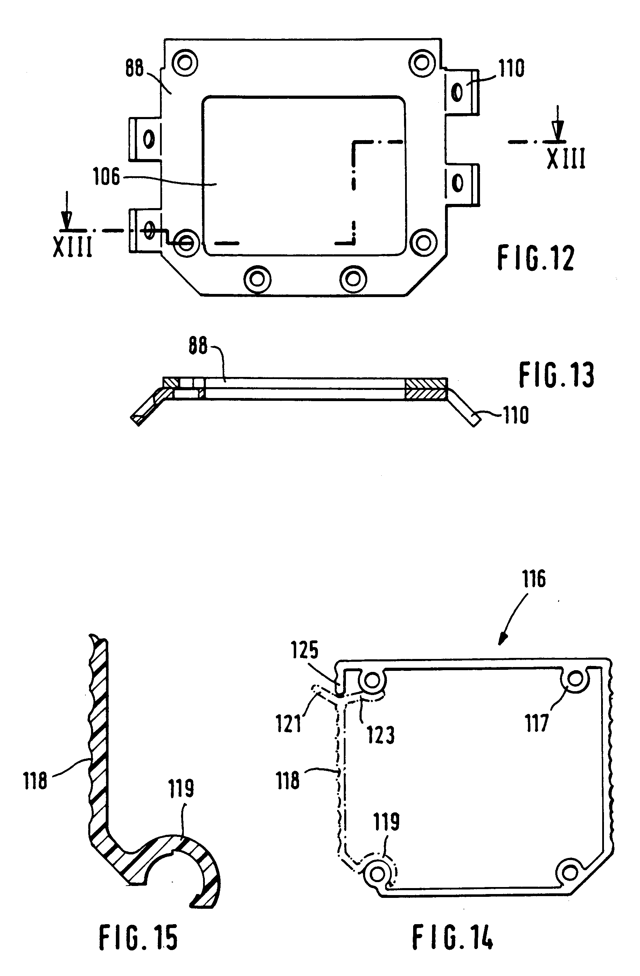

Die Verbindungsplatte 88 (Figur 11, 12 und 13) hat eine große Öffnung 106, die die gleiche Größe hat wie seitliche Öffnungen 108 des Knotenkörpers 18. Vorzugsweise sind diese Öffnungen so groß, daß nicht nur Leitungen sondern auch ihre Stecker, möglichst auch Mehrfachsteckdosen durchgeführt werden können. Das gleiche gilt für Höhe und Breite des Hohlbalkens 22 und seines Haupt-Kabelkanals 96. Die Verbindungsplatte 88 hat Laschen 110, die unter 135° zu ihrer Hauptebene abstehen und in ihrer Höhe so versetzt sind, daß der Zwischenraum zwischen zwei Laschen gleich der Breite einer Lasche plus Spiel ist. Wie man sieht, sind die Laschen an der rechten Seite (Figur 12) der Zwischenplatte 88 gegenüber denen an der linken Seite in der Höhe versetzt. Das gleiche gilt für die Abdeckplatte 90 (Figur 11). Werden also die Zwischenplatte 88 und die Abdeckplatte 90 angeschraubt, so greifen ihre Laschen zwischeneinander und stellen dadurch eine von oben nach unten geschlossene Reihe von Laschen dar, die eine von vier schrägen Eckflächen 113 des Knotenkörpers 18 von oben nach unten vollständig abdecken.

Zum Anbringen eines Hohlbalkens (z. B. 23 in Figur 2) an einer Wand dient eine Wandkontaktplatte 26 (Figur 18) mit großer Öffnung 107 in ihrer Mitte. Die Wandkontaktplatte hat rechts und links je eine unter 135° zu ihrer Hauptebene geneigte Eckfläche 113', in der flache rechteckige Vertiefungen 110v für je eine Lasche 110 einer Verbindungsplatte 88' vorgesehen sind. Zum Anschrauben der Laschen sind Gewindebohrungen 115' vorhanden, die rechtwinklig zu den Eckflächen 113' verlaufen. Nach dem Anschrauben eines mit einer Verbindungsplatte versehenen Hohlbalkens 22 oder 23 ergeben sich geschlossenen Eckflächen an den Wandkontaktplatten 26.

## Die Höheneinstellvorrichtung

ist in den Figuren 11, obere Hälfte, sowie 16 und 17 dargestellt. Sie hat eine untere Befestigungsplatte 130, die oben auf den Knotenkörper 18 schraubbar ist und dessen obere Öffnung 132 dann abdeckt. Sie ragt mit ihrem Mittelteil in diese Öffnung hinein, während Befestigungslaschen 134 an ihren vier Ecken oberhalb ihres Mittelteils ansetzen. Der Mittelteil trägt eine Außengewinde-Hülse 136. Eine Hülse mit einem dazu passenden Innengewinde (Innengewinde-Hülse 138) ist ein selbstständiger Bauteil mit einer zylindrischen Außenwand und einem Außenflansch 140, der ein kleines Stück oberhalb ihres unteren Randes ansetzt. Die Innengewinde-Hülse 138 hat zwei Bohrungen 142, die achsparallel verlaufen und von oben her zugänglich sind. Sie dienen zum Einsatz der beiden Dorne eines Stirnlochschlüssels, durch den die Innengewinde-Hülse verdreht werden kann. Eine obere Befestigungsplatte 144 läßt sich von unten her an der Tischplatte 2 festschrauben. Sie hat eine mittige Öffnung 146, die über den unteren Teil der Innengewinde-Hülse 138 paßt und einen nach unten eingedrückten, ringförmigen Rand 148. Der Rand 148 geht durch einen kegelförmigen Abschnitt 150 in die Befestigungsplatte 144 über. Der Außenflansch 140 hat eine dazu passende Kegelform.

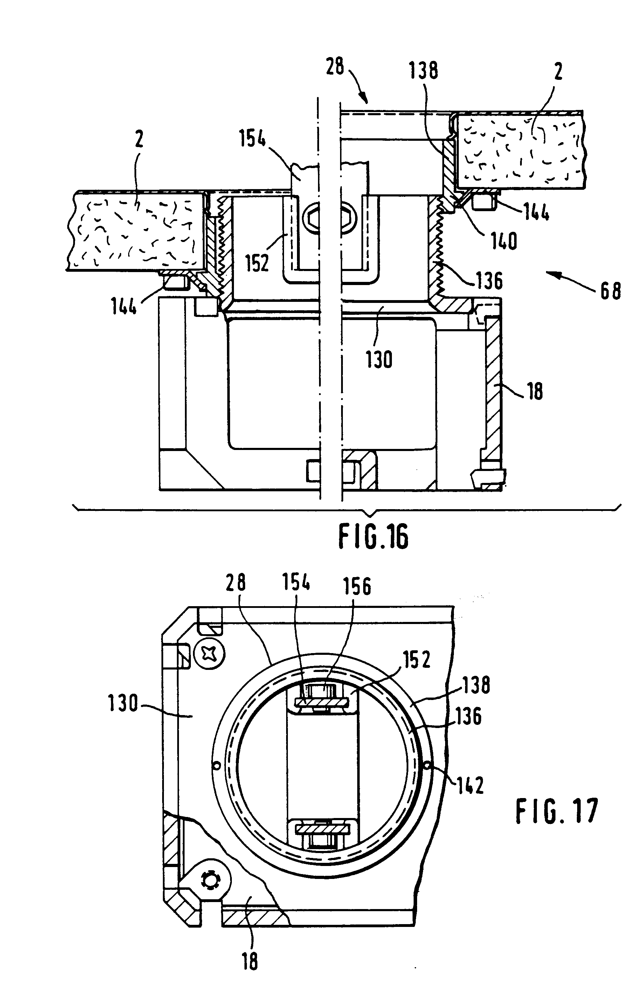

Zur Montage wird in jede der beiden Öffnungen 28 (Figuren 11 und 3) der Tischplatte eine Innengewinde-Hülse 138 von unten her eingesteckt. Dann wird an beiden Stellen die obere Befestigungsplatte 144 so angeschraubt, daß sie die Innengewinde-Hülse 138 in der Öffnung 28 drehbar festhält. Nachdem die untere Befestigungsplatte 130 auf den Knotenkörper 18 geschraubt ist, wird die Tischplatte 2 so über diesen und den weiteren Knotenkörper gesetzt, daß die Innengewinde-Hülsen 138 auf die Außengewinde-Hülsen 136 geschraubt werden können. Mit Hilfe des Stirnlochschlüssels, der durch die Öffnungen 28 der Tischplatte eingeführt wird, läßt sich jeweils die eine Hülse gegenüber der anderen verdrehen, wodurch die Tischplatte 2 in eine passende Höhe gebracht werden kann. Figur 16 zeigt die untere Grenzlage links und die ober Grenzlage rechts.

## Anbringung des Obergestells

Im Innern der Außengewinde-Hülse 136 sind lotrechte Führungen 152 (Figuren 11, 16, 17) angeformt, in die lotrechte bandförmige Laschen 154 von oben her eingeführt werden können. Diese Laschen sind an den Unterenden der Tragarme 12 angebracht und gestatten es, die Tragarme durch die Öffnungen 28 der Tischplatte 2 hindurch am Knotenkörper 18 zu verankern. Die Laschen sind mit je einer Feststellschraube 156 versehen, die gegen die Innenwand der Außengewinde-Hülse 136 angezogen werden können und damit die Tragarme gegen Herausziehen festlegen.

## Zweite Ausführungsform des Hohlbalkens

Figur 14 zeigt einen Hohlbalken 116, der aus Aluminium oder Leichtmetall stranggepreßt ist, mit nur einfach ausgebildeten Wänden. Nahe seinen vier Ecken befinden sich Röhrchen 117, die mit den Wänden einteilig ausgebildet sind und deren freie Enden zum Eindrehen selbstschneidender Schrauben bei der Befestigung des Hohlbalkens dienen. Die eine Seite des Hohlbalkens ist offen und läßt sich durch eine in Figur 14 strichpunktiert dargestellte Klappe 118 aus Leichtmetall oder Kunststoff schließen. Am unteren Ende der Klappe ist ein im Querschnitt etwa U-förmiger Gelenkabschnitt 119 vorgesehen. Nach dem Einsetzen der Klappe umgreift dieser Gelenkabschnitt eines der Röhrchen 117. Die Klappe hat oben die nach außen vorstehende Griffleiste 121 und einen nach innen vorstehenden Rastabschnitt 123, dessen äußerer gekrümmter Abschnitt zum Einrasten hinter dem oberen linken Röhrchen 117 dient. Die Klappe kann also ganz entfernt werden und behindert dann nicht das Einlegen der Kabel in den Innenraum des Hohlbalkens. Anschließend wird die Klappe mit ihrem Gelenkabschnitt 119 über das untere linke Röhrchen 117 gesetzt, wo sie einschnappt, da ihr Gelenkabschnitt im Querschnitt etwas mehr als einen Halbkreis umfaßt. Anschließend wird die hochgeklappt und oben eingerastet. Die Einwärtsbewegung wird durch Anschlag ihrer Griffleiste gegen einen abwärts gerichteten Abschnitt 125 des Hohlbalkens begrenzt.

Zweite und bevorzugte Ausführungsform des Knotenkörpers

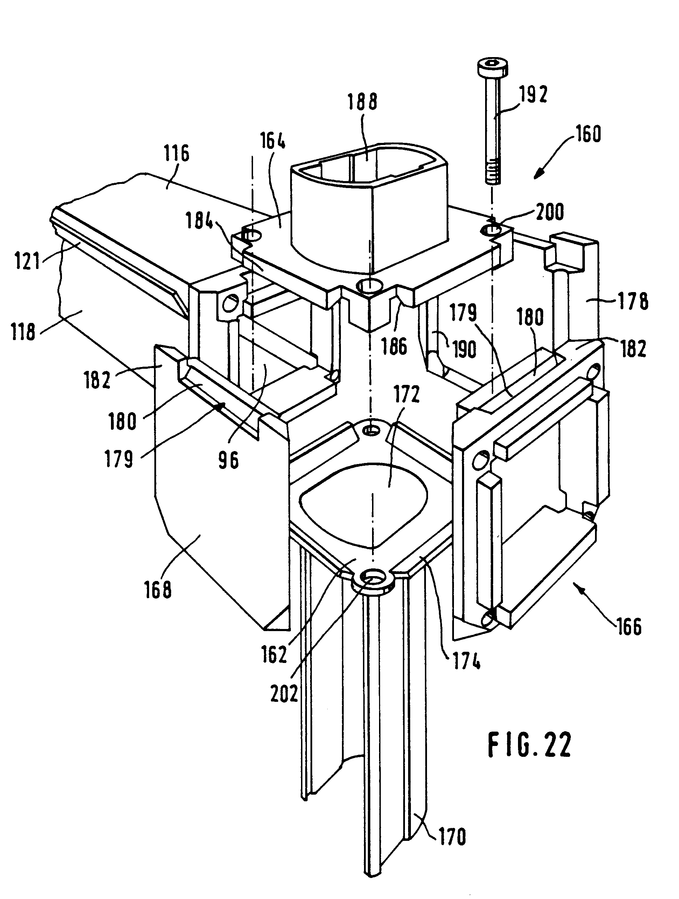

Figur 22 zeigt einen aus Einzelteilen zusammenzusetzenden Knotenkörper, der als Ganzes mit 160 bezeichnet ist. Der Knotenkörper wird bei Bedarf zusammengesetzt aus einer Bodenplatte 162, einer Deckplatte 164 und vier Seitenwänden, nämlich einer bis vier offenen Seitenwänden 166 und/oder einer bis vier geschlossenen Seitenwänden 168.

Die Bodenplatte 162 ist am oberen Ende einer im Querschnitt etwa U-förmigen Stütze 170 befestigt. Sie hat eine große Mittelöffnung 172, durch die Kabel aus dem Innenraum der Stütze nach oben geführt werden können. Die vier Randabschnitte 174 der Bodenplatte 162 sind unter 45° nach oben abgewinkelt. Alle Seitenwände 166, 168 haben unten je einen durchgehenden Schlitz 176 (Figur 24), der unter 45° abwärts verläuft, und zwar so, daß die Seitenwand auf den Randabschnitt 174 der Bodenplatte gesteckt werden kann. Der linke und rechte Rand jeder Seitenplatte verläuft unter einem Winkel von 45° zu ihrer Hauptebene (Figur 25). Somit lassen sich vier Seitenwände auf Gehrung zusammenfügen. Alle Seitenwände haben oben eine ebenfalls unter 45° geneigte Anlegefläche 180 (Figuren 22 und 24), die in einer Ausnehmung der Platte vorgesehen ist und seitlich durch nach oben vorstehende Abschnitte 182 der Seitenplatten begrenzt ist.

Die Deckplatte 164 hat an ihren vier Seiten zu den Ausnehmungen 179 passende Eingriffleisten 184. Sie haben innen je eine Andruckfläche 186, einer Neigung von 45°, passend zur Anlegefläche 180 der Seitenwände. Die Deckplatte hat eine große Mittelöffnung und einen Aufsatz 188 mit zwei zueinander parallelen und zwei kreiszylindrisch gekrümmten Wandabschnitten, die zum Eingriff in die Öffnungen 28 der Tischplatte dienen.

Die Seitenwände 166 und 168 haben von oben nach unten durchgehende Rinnen 190 (Figur 25), die Raum für die Schäfte von Schraubbolzen 192 bieten.

Zum Zusammenfügen dieses Knotenkörpers werden auf die Bodenplatte 162 vier Seitenwände 166, 168 gesetzt, und zwar je nachdem, wo Kabel geführt werden müssen, geöffnete oder geschlossene Seitenwände. Dann wird die Deckplatte 164 aufgesetzt, wobei deren Eingriffsleisten 184 in die oberen Ausnehmungen 179 der Seitenwände eingreifen und die Seitenwände zusammenhalten. Schließlich werden von den vier Ecken der Deckplatte aus durch Löcher 200 die Schraubbolzen 192 gesteckt, jeweils in zwei zueinandergekehrten Rinnen 190 der Seitenwände entlanggeführt und in Schraublöcher 202 der Bodenplatte eingedreht.

Die offenen Seitenwände 166 werden vor dem Zusammenbau des Knotenkörpers an einem Hohlbalken 116 mit Hilfe selbstschneidender Schrauben befestigt.

Auch bei dieser zweiten Ausführungsform des Knotenkörpers läßt sich eine Höhenverstellvorrichtung anbringen, die zwischen dem Aufsatz 188 und der Tischplatte wirksam ist, hier aber nicht im einzelnen dargestellt wurde.

## BEZUGSZEICHEN

| | |
|---|---|
| 2, 2' | Tischplatte |
| 4 | Unterschrank |
| 6 | Untergestell |
| 7 | Bein |
| 8 | Stütze, einfach |
| 10 | Obergestell |
| 12 | Tragarm |
| 13 | Träger |
| 14 | Rohr |
| 16 | Wand |
| 18 | Knotenkörper |
| 20 | Stütze, U-förmig |
| 21 | Rohr |
| 22, 23 | Hohlbalken, gerade |
| 24 | Hohlbalken, gewinkelt |
| 26 | Wandkontaktplatte |
| 27 | Abdeckteller |
| 27' | Kabeldurchlaß |
| 28 | Öffnung |
| 29 | Ringkörper |
| 29' | Abschnitt |
| 30 | Abdeckscheibe |
| 32 | Abdeckblech, rinnenförmig |
| 34 | Abdeckblech |
| 36 | Randteil |
| 38 | Abdeckblech |
| 42 | Bein |
| 44 | Schrägkante |
| 45 | Ablagebrett |
| 46 | Vorderkante |
| 47 | Obergestell |
| 48 | Tragarm |
| 49 | Abdeckblech |
| 50 | Ansatzplatte |
| 52 | Hohlbalken |

| | |
|---|---|
| 53 | Schlitz |
| 54 | Kabelkanal |
| 55, 56 | Wand |
| 57 | Rückwand |
| 58 | Stange |
| 59 | Ansatzplatte |
| 60 | Ansatzplatte, quadratisch |
| 62 | Ansatzplatte |
| 64 | Unterschrank |
| 66 | Oberschrank |
| 68 | Höheneinstellvorrichtung |
| 70 | Vorderkante |
| 72 | Höheneinstellelement |
| 73 | Platte |
| 74 | Rohr |
| 75, 76 | Ablagebrett |
| 77 | Stütze |
| 78 | Ausnehmung |
| 79 | Hinterschneidung |
| 80 | Klammer |
| 81 | Hinterschneidung |
| 82 | Klaue |
| 83 | Abdeckung |
| 88, 88′ | Verbindungsplatte |
| 90 | Abdeckplatte |
| 92 | Querträger |
| 94 | Steckfuß |
| 95 | Öffnung |
| 96 | Haupt-Kabelkanal |
| 98 | Einsetzteil |
| 100 | innerer Kabelkanal |
| 102 | Loch |
| 104 | Schraube |
| 106, 107, 108 | Öffnung |
| 110 | Lasche |
| 110v | Vertiefung |
| 113, 113′ | Eckfläche |
| 115, 115′ | Gewindebohrung |
| 116 | Hohlbalken |
| 117 | Röhrchen |
| 118 | Klappe |
| 119 | Gelenkabschnitt an Klappe |
| 121 | Griffleiste |
| 123 | Rastabschnitt |
| 125 | Abschnitt |
| 130 | Befestigungsplatte, untere |
| 132 | Öffnung |
| 134 | Befestigungslasche |
| 136 | Außengewinde-Hülse |
| 138 | Innengewinde-Hülse |
| 140 | Außenflansch |
| 142 | Bohrung |
| 144 | Befestigungsplatte, obere |
| 146 | (Mittel)öffnung |
| 148 | Rand |
| 150 | kegelförmiger Abschnitt |
| 152 | Führung |
| 154 | Lasche |

| | |
|---|---|
| 156 | Feststellschraube |
| 160 | Knotenkörper |
| 162 | Bodenplatte |
| 164 | Deckplatte |
| 166 | Seitenwand, offen |
| 168 | Seitenwand, geschlossen |
| 170 | Stütze |
| 172 | Mittelöffnung |
| 174 | Randabschnitt |
| 176 | Schlitz |
| 178 | Rand |
| 179 | Ausnehmung |
| 180 | Anlegefläche |
| 182 | Abschnitt |
| 184 | Eingriffleiste |
| 186 | Andruckfläche |
| 188 | Aufsatz |
| 190 | Rinne |
| 192 | Schraubbolzen |
| 200 | Loch |
| 202 | Schraubloch |

**Patentansprüche**

1. Büro-Arbeitsplatz mit
   a) einer höhenverstellbaren Tischplatte (2),
   b) einem Untergestell (6), in dem Kabelkanäle vorgesehen sind zum Tragen der Tischplatte,
   c) Ansatzteilen (50, 59, 60 etc.) für die Tischplatte,
   d) Zusatzteilen (75, 76), die bei Bedarf oberhalb der Tischplatte anzubringen sind,
   e) durchgehenden Öffnungen (28) innerhalb der Tischplatte zum Durchführen von Kabeln und zum montieren der Zusatzteile,
   **gekennzeichnet** durch folgende Merkmale:
   f) das Untergestell hat quaderförmige hohle Knotenkörper (18, 160) mit relativ großen Durchtrittsöffnungen in ihren Wänden,
   g) die Knotenkörper dienen zur Verbindung von in Gebrauchslage lotrechten Stützen (8, 20, 170) und waagerechten Hohlbalken (22, 24, 116),
   h) anstelle mindestens einer der beiden vorderen Ecken hat die Tischplatte (2, 2') eine Schrägkante (44) einer Länge von mindestens 30 cm, wobei die Schrägkante zum Anfügen von Platten (Ansatzplatten 50, 59, 60) dient,
   i) entsprechend der Schrägkante (44) der Tischplatte ist einer der Hohlbalken (24) abgewinkelt, derart, daß er eine nach vorn auswärts verlaufende Verlängerung hat, die etwa rechtwinklig zur Schrägkante verläuft, unter dieser nach außen vorsteht und zusammen mit mindestens einem Knotenkörper (18) zum Tragen von Ansatzteilen dient,

j) an der Verlängerung des Hohlbalkens (24) ist über den Knotenkörper (18) hinaus ein weiteres Stück Hohlbalken (23) anbringbar, das insbesondere zum Anschluß an eine Wand dient.

(Figuren 1 bis 4)

2. Büro-Arbeitsplatz nach Anspruch 1, dadurch **gekennzeichnet,** daß die Schrägkante (44) unter einem Winkel von etwa 135° zur Vorderkante (46) der Tischplatte (2) verläuft und insbesondere eine Länge von etwa 45 cm hat.

3. Büro-Arbeitsplatz nach Anspruch 1, **gekennzeichnet** durch folgende Merkmale:

   a) die Hohlbalken (22, 24, 116) bilden eine rückwärtige und seitliche Verbindungen zwischen den Stützen,

   b) die Kabelkanäle verlaufen durch die Hohlbalken und die Knotenkörper sowie neben den Stützen (8, 20) innerhalb zugehöriger Abdeckbleche (32, 34),

   c) die Beine (7) weisen je eine Stütze (8) in Form eines Rohrs von rechteckigem Querschnitt auf,

   d) Abdeckbleche (32) von rinnenartigem Querschnitt umgeben beide Seiten der Stütze und lassen Kabelraum zwischen Stütze und Abdeckblechen frei.

4. Büro-Arbeitsplatz nach Anspruch 1, dadurch **gekennzeichnet,**

   a) daß eine lotrechte Wand der Hohlbalken (22, 23, 56, 116) eine um eine waagerechte Achse schwenkbare Klappe (118) aufweist, die sich insbesondere über nahezu die ganze Höhe der Wand erstreckt,

   b) und daß die Klappe (118) um ein zweiteiliges Gelenk schwenkbar ist, von dem der eine Gelenkabschnitt (119) einstückig mit der Klappe, der andere einstückig mit dem Hauptteil des Hohlbalkens (116) ausgebildet ist.

5. Büro-Arbeitsplatz mit

   a) einer höhenverstellbaren Tischplatte (2),

   b) einem Untergestell (6), in dem Kabelkanäle vorgesehen sind zum Tragen der Tischplatte,

   c) durchgehenden Öffnungen (28) innerhalb der Tischplatte zum Durchführen von Kabeln und zum montieren der Zusatzteile, **gekennzeichnet** durch folgende Merkmale:

   d) das Untergestell hat quaderförmige hohle Knotenkörper (18, 160) mit relativ großen Durchtrittsöffnungen in ihren Wänden,

   e) die Knotenkörper dienen zur Verbindung von in Gebrauchslage lotrechten Stützen (8, 20) und waagerechten Hohlbalken (22, 24, 116),

   f) die Knotenkörper (18) haben einen im wesentlichen quadratischen waagerechten Querschnitt,

   g) die Knotenkörper haben unter 45° zu ihren Seitenwänden geneigte schmale Eckflächen (113),

   h) die Abdeckplatten (90) und die Verbindungsplatten (88) haben an ihren lotrechten Rändern angeformte Laschen (110), die unter 135° zu den Hauptebenen dieser Platten derart geneigt sind, daß sie an die Eckflächen anlegbar sind,

   i) je zwei Laschen (110) sind durch Zwischenräume gleicher Höhe voneinander getrennt,

   j) die Laschen am einen lotrechten Rand der Abdeck- und Verbindungsplatten sind in der Höhe gegenüber denen am anderen lotrechten Rand in der Höhe versetzt, derart, daß bei geschlossenem Knotenkörper die Laschen zweier Platten an einer Eckfläche von oben nach unten eine geschlossene Reihe bilden.

(Figur 11)

6. Büro-Arbeitsplatz nach Anspruch 5, **gekennzeichnet** durch folgende Merkmale:

   a) rahmenartige Verbindungsplatten (88) dienen zum Befestigen der Knotenkörper an den Enden der Hohlbalken,

   b) Abdeckplatten (90) dienen zum Verschließen freibleibender Seiten der Knotenkörper.

7. Büro-Arbeitsplatz nach Anspruch 5, dadurch **gekennzeichnet,** daß die Öffnungen (108) in den Seitenwänden der Knotenkörper (18) im wesentlichen die Größe und Form des Querschnitts der Kabelkanäle (96, 100) der Hohlbalken (22) haben.

8. Büro-Arbeitsplatz nach Anspruch 5, **gekennzeichnet** durch folgende Merkmale:

   a) die Laschen (110) haben je ein Loch für Schraubschäfte,

   b) die Eckflächen haben je eine lotrechte Reihe von Gewindebohrungen (115) unter dazu passenden Abständen.

9. Büro-Arbeitsplatz mit

   a) einer höhenverstellbaren Tischplatte (2),

   b) einem Untergestell (6), in dem Kabelkanäle vorgesehen sind zum Tragen der Tischplatte,

   c) durchgehenden Öffnungen (28) innerhalb der Tischplatte zum Durchführen von Kabeln und zum montieren der Zusatzteile, **gekennzeichnet** durch folgende Merkmale:

d) das Untergestell hat quaderförmige hohle Knotenkörper (160) mit relativ großen Durchtrittsöffnungen in ihren Wänden,

e) die Knotenkörper dienen zur Verbindung von in Gebrauchslage lotrechten Stützen (170) und waagerechten Hohlbalken (116),

f) die Knotenkörper (160) haben einen im wesentlichen quadratischen waagerechten Querschnitt,

g) wobei die Knotenkörper (160) aus Einzelteilen zusammensetzbar sind, zu denen gehören:

h) eine Bodenplatte (162), die zum oberen Abschluß der insbesondere hohlen und im Querschnitt U-förmig ausgebildeten Stütze (170) dient und eine entsprechend große Mittelöffnung (172) hat,

i) eine zur Bodenplatte passende Deckplatte (164), die einen Aufsatz (188) in Form eines Rohrstutzens zum Einfügen in eine Öffnung (28) der Tischplatte trägt und eine dazu passende mittige Öffnung hat,

j) vier zwischen Bodenplatte und Deckplatte, in Gebrauchslage lotrecht einzufügende Seitenwände (166, 168),

k) geschlossene (168) und solche Seitenwände (166), die eine Öffnung von der etwaigen Größe und Form eines Haupt-Kabelkanals (96) haben und als Verbindungsplatten dienen.

(Figur 22)

10. Büroarbeitsplatz nach Anspruch 9, **gekennzeichnet** durch folgende Merkmale:

a) die in Gebrauchslage lotrechten seitlichen Ränder (178) der Seitenwände (166, 168) sind unter 45° einwärts geneigt,

b) in den Seitenrändern sind lotrechte Rinnen (190) zum Umfassen der Schäfte von Schraubbolzen (192) vorgesehen, durch die nach dem Einsetzen der Seitenwände die Deckplatte mit der Bodenplatte zu verbinden ist.

11. Büroarbeitsplatz nach Anspruch 9 oder 10, **gekennzeichnet** durch folgende Merkmale:

a) die Seitenwände (166, 168) haben unten Schlitze (176), die bei zusammengesetztem Knotenkörper abwärts und einwärts verlaufen,

b) die Bodenplatte (162) hat Randabschnitte (174), deren Oberseiten dazu passende, aufwärts und auswärts verlaufende Schrägflächen haben.

12. Büroarbeitsplatz nach Anspruch 9 oder 10, **ge-**

**kennzeichnet** durch folgende Merkmale:

a) die Ränder der Deckplatte haben abwärts weisende Eingriffsleisten (184) in Form von Klauen,

b) die Oberkanten der Seitenwände haben zu den Klauen passende Ausnehmungen (179).

13. Büroarbeitsplatz nach Anspruch 12, **dadurch gekennzeichnet,** daß die Klauen und die Ausnehmungen in Gebrauchslage im wesentlichen lotrechte Außenflächen und auswärts und abwärts verlaufende innere Flächen (Andruckflächen 186) haben.

14. Büro-Arbeitsplatz nach Anspruch 5, **dadurch gekennzeichnet,** daß die Verbindungsplatten (88) einen Kranz von Löchern für Schraubschäfte und die Stirnseiten der Wände der Hohlbalken passend angeordnete Löcher (102, 117) haben.

15. Büro-Arbeitsplatz nach Anspruch 1 oder 3, **gekennzeichnet** durch folgende Merkmale:

a) zum Befestigen eines Hohlbalkens (23) an einer Wand dient eine Wandkontaktplatte (26) mit einem Kranz von Schrauböffnungen,

b) die Wandkontaktplatte hat unter 135° zu ihrer Hauptebene geneigte schmale Eckflächen (113') mit Schrauböffnungen (115') für die Laschen (110) einer Verbindungsplatte (88),

c) in den Eckflächen sind flache Vertiefungen (110v) zur Aufnahme je einer einzuschraubenden Lasche (110) vorgesehen.

16. Büro-Arbeitsplatz nach Anspruch 3, **dadurch gekennzeichnet,** daß zum Befestigen des Untergestells (6) an der Tischplatte (2, 2') Höheneinstellvorrichtungen (68) dienen, die teils an der Oberseite je eines Knotenkörpers (18), teils an der Unterseite der Tischplatte anzubringen sind.

17. Büro-Arbeitsplatz nach Anspruch 16, **gekennzeichnet** durch folgende Merkmale:

a) die Höheneinstellvorrichtung hat eine am Knotenkörper (18) anzubringende untere (130) und eine an der Tischplatte anzubringende obere Befestigungsplatte (144),

b) an der unteren Befestigungsplatte sitzt eine nach oben ragende Hülse (136) mit Außengewinde,

c) eine Hülse (138) mit passendem Innengewinde ist auf die Hülse mit Außengewinde zur Höheneinstellung schraubbar und von unten her in eine der Öffnungen (28) der Tischplatte steckbar,

d) die Hülse mit Innengewinde hat einen Außenflansch (140),

e) die obere Befestigungsplatte (144) hat eine kreisförmige Öffnung (146), die mit Spiel über den Außendurchmesser der Innengewinde-Hülse (138) paßt und deren Durchmesser kleiner ist als der des Außenflansches (140),

f) derart, daß nach dem Anbringen der Befestigungsplatten (130, 144) der Höhenabstand der oberen Befestigungsplatte gegenüber der unteren und damit die Höhe der Tischplatte durch Verdrehen der Innengewindehülse gegenüber der Außengewindehülse veränderbar ist.

18. Büro-Arbeitsplatz nach Anspruch 17, **gekennzeichnet** durch folgende Merkmale:

a) im Innern der Innengewinde-Hülse (136) sind lotrechte Führungen (152) für Laschen (154) vorgesehen, die von Tragarmen (12) des Obergestells (10) abwärts ragen und zu deren Befestigung am Untergestell (6) dienen,

b) die Laschen sind von oben in die Führungen (152) einschiebbar und durch Feststellschrauben (156) festsetzbar.

19. Büro-Arbeitsplatz nach Anspruch 1 oder 18, **gekennzeichnet** durch folgende Merkmale:

a) das Obergestell (10, 47) hat zwei Tragarme (12, 48), deren Unterenden durch Öffnungen (28) der Tischplatte hindurch mit dem Untergestell (6) zu verbinden sind,

b) an den Oberenden der Tragarme ist ein zur Tischplatte parallel verlaufender Träger (13) befestigt, der zum Haltern von Ansatzteilen dient.

20. Büro-Arbeitsplatz nach Anspruch 19, dadurch **gekennzeichnet,** daß die Tragarme (12) einen Viertel-Kreisbogen bescheiben.

21. Büro-Arbeitsplatz nach Anspruch 20, dadurch **gekennzeichnet,** daß am Träger eine einen Sichtschutz bildende Wand (16) befestigt ist, die nach unten, insbesondere bis zum Fußboden reicht.

22. Büro-Arbeitsplatz nach Anspruch 1 oder 18, **gekennzeichnet** durch folgende Merkmale:

a) der Träger ist ein Hohlbalken (52) von langgestrecktem, in Gebrauchslage aufrechtem Querschnitt,

b) der Träger hat an seiner einen Seitenfläche einen Längsschlitz (53) einer zum Durchführen von Kabeln ausreichenden Weite,

c) der Träger bildet in seinem Innern unterhalb der Höhe des Längsschlitzes einen Kabelkanal (54).

23. Büro-Arbeitsplatz nach Anspruch 22, **gekennzeichnet** durch folgende Merkmale:

a) der Träger hat oben und unten eine Wand (55, 56) mit teilzylindrischer Außenfläche,

b) an den Rändern dieser Außenflächen sind über die Länge des Hohlbalkens verlaufende Hinterschneidungen (79, 81) vorgesehen,

c) Stützen (77) zum Anbringen von Zusatzteilen haben dazu passende Klauen (82).

24. Büro-Arbeitsplatz nach Anspruch 1 oder 3, **gekennzeichnet** durch folgende Merkmale:

a) das Untergestell hat an mindestens einer Schmalseite eine Stütze (20) in Form eines nach oben offenen U,

b) zu beiden Seiten der Stütze ist ein Abdeckblech (34) mit wannenförmigen Randteilen (36) ansetzbar,

c) derart, daß der Raum zwischen den Abdeckblechen einen Kabelschrank darstellt, dessen Breite zwischen den Abdeckblechen wesentlich größer ist als die Breite der Stütze.

**Claims**

1. Office workstation including

a) a vertically adjustable table plate (2),

b) a lower frame (6) in which cable passages are provided for supporting the table plate,

c) attachments (50, 59, 60 etc.) for the table plate,

d) additional components (75, 76) which may be mounted above the table plate when required,

e) through-openings (28) within the table plate for the passage of cables and for mounting the additional components,

**characterised** by the following features:

f) the lower frame has cuboidal hollow joint bodies (18, 160) with relatively large openings in their walls,

g) the joint bodies serve to connect supports (8, 20), which are vertical in the use position, and horizontal hollow beams (22, 24, 116),

h) instead of at least one of the two front corners the table plate (2, 2') has an oblique edge (44) of a length of at least 30 cm, whereby the oblique edge serves for the joining on of plates (extension plates 50, 59, 60).

i) one of the hollow beams (24) is angled in a manner corresponding to the oblique edge (44) of the table plate in such a manner that is has a forwardly and outwardly extending extension which extends approximately at right-angles to the oblique edge, projects outwardly below it and together with at least one joint body (18) serves to support attachments.

j) a further piece of hollow beam (23), which particularly serves for connecting to a wall, can be attached to the extension of the hollow beam (24) via the joint body (18).

(Figures 1 to 4)

2. Office workstation as claimed in claim 1, **characterised** in that the oblique edge (44) extends at an angle of about 135° to the front edge (46) of the table plate (2) and, in particular, has a length of about 45 cm.

3. Office workstation as claimed in claim 1, **characterised** by the following features:

a) the hollow beams (22, 24, 116) form rearward and lateral connections between the supports,

b) the cable passages extend through the hollow beams and the hoint bodies and adjacent the supports (8, 20) within associated cover plates (32, 34).

c) the legs (7) each have a support (8) in the form of a tube of rectangular cross-section and

d) cover plates (32) of channel-like cross-section which surround both sides of the support and leave free a cable space between the support and cover plates.

4. Office workstation as claimed in claim 1, **characterised**

a) in that a vertical wall of the hollow beams (22, 23, 56, 116) has a flap (118) which is pivotable about a horizontal axis and which particularly extends over nearly the entire height of the wall,

b) in that the flap (118) is pivotable about a two-part joint, of which the one joint section (119) is constructed integrally witz the flap and the other is constructed integrally with the main portion of the hollow beam (116).

5. Office workstation including

a) a vertically adjustable table plate (2),

b) a lower frame (6) in which cable passages are provided for supporting the table plate,

c) through-openings (28) within the table plate for the passage of cables and for mounting the additional components, **characterised** by the following features:

d) the lower frame has cuboidal hollow joint bodies (18, 160) with relatively large openings in their walls,

e) the joint bodies serve to connect supports (8, 20), which are vertical in the use position, and horizontal hollow beams (22, 24, 116),

f) the joint bodies (18) have a substantially square horizontal section,

g) the joint bodies have narrow corner surfaces (113) inclined at 45° to their side walls,

h) the cover plates (90) and the connecting plates (88) have lugs (110) formed on their vertical edges which are so inclined at 135° to the main planes of these plates that they may be joined to the corner surfaces,

i) each two lugs (110) are separated from one another by spaces of the same height,

j) the lugs on one vertical edge of the cover and connecting plates are vertically offset with respect to those on the other vertical edge in such a manner that when the joint body is closed, the lugs of two plates form a closed row from top to bottom at a corner surface.

(Figure 11)

6. Office workstation as claimed in claim 5, **characterised** by the following features:

a) frame-like connecting plates (88) serve to secure the joint bodies to the ends of the hollow beams,

b) cover plates (90) serve to close the exposed sides of the joint bodies.

7. Office workstation as claimed in claim 5, **characterised** in that the openings (108) in the side walls of the joint bodies (18) have substantially the size and shape of the cross-section of the cable passages (96, 100) in the hollow beams (22).

8. Office workstation as claimed in claim 5, **characterised** by the following features:

a) the lugs (110) each have a hole for screw shafts,

b) the corner surfaces each have a vertical row of threaded bores (115) at complementary spacings.

9. Office workstation including

a) a vertically adjustable table plate (2),

b) a lower frame (6) in which cable passages are provided for supporting the table plate,

c) through-openings (28) within the table plate for the passage of cables and for mounting the additional components, **characterised** by the following features:

d) the lower frame has cuboidal hollow joint bodies (160) with relatively large openings in their walls,

e) the joint bodies serve to connect supports (170), which are vertical in the use position, and horizontal hollow beams (116),

f) the joint bodies (160) have an in general square horizontal cross-section,

g) wherein the joint bodies (160) may be assembled from individual components, which include:

h) a bottom plate (162) which serves to close the top of a support (170), particularly hollow and of U-shaped cross-section and has a correspondingly large central opening (172),

i) a top plate (164) matching the bottom plate which carries a fixture (188) in the form of a socket for introduction into an opening (28) in the table plate and has a central opening complementary thereto,

j) four side walls (166, 168) which in the use position are vertical, for insertion between the bottom plate and top plate,

k) closed side walls (168) and such side walls (166), which have an opening of the approximate size and shape of a main cable passage (96) and serve as connecting plates, are present for the respective construction.

(Figure 22).

10. Office workstation as claimed in claim 9, characterised by the following features:

a) the lateral edges (178), which in the use position are vertical, of the side walls (166,168) are inclined inwardly at 45°,

b) provided in the side edges are vertical grooves (190) for embracing the shafts of bolts (192) by which the top plate is to be connected with the bottom plate after the insertion of side walls.

11. Office workstation as claimed in claim 9 or 10 characterised by the following features:

a) the side walls (166,168) have at their bottom slots (176) which extend downwardly and inwardly when the joint body is assembled,

b) the bottom plate (162) has edge sections (174) whose upper sides have oblique surfaces complementary thereto extending upwards and outwards.
(Figures 22 and 24).

12. Office workstation as claimed in claim 9 or 10, characterised by the following features:

a) the edges of the top plate have downwardly directed engagement bars (184) in the form of jaws,

b) the upper edges of the side walls have recesses (179) matching the jaws.

13. Office workstation as claimed in claim 12, characterised in that the jaws and the recesses have external surfaces, which in the use position extend substantially vertically, and outwardly and downwardly extending inner surfaces (pressure surfaces 186).

14. Office workstation as claimed in claim 5, characterised in that the connecting plates (88) have a ring of holes for screw shafts and the front faces of the walls of the hollow beams have complementarily arranged holes (102,117).
(Figures 11,12,14).

15. Office workstation as claimed in claim 1 or 3, characterised by the following features:

a) a wall contact plate (26) with a ring of screw openings serves for fastening a hollow beam (23) to a wall,

b) the wall contact plate has narrow corner surfaces (113') inclined at 135° to its main plane with screw openings (115') for the lugs (110) of a connecting plate (88),

c) flat recesses (110v) for receiving a respective lug (110) each to be screwed in are provided in the corner surfaces.

16. Office workstation as claimed in claim 3, characterised in that height adjustment devices (68), which are to be mounted in part on the upper side of a respective joint body (18) and in part on the underside of a table plate, serve to secure the lower frame (6) to the table plate (2,2').

17. Office workstation as claimed in claim 16, characterised by the following features:

a) the height adjustment device has a lower fastening plate (130) to be secured to the joint body (18) and an upper fastening plate (144) to be secured to the table plate,

b) an upwardly extending sleeve (136) with an external thread sits on the lower fastening plate,

c) a sleeve (138) with a matching internal thread may be screwed onto the sleeve with the external thread for the purpose of height adjustment and may be plugged from below into one of the openings (28) in the table plate,

d) the sleeve with the internal thread has an external flange (140),

e) the upper fastening plate (144) has a circular opening (146) which fits with a clearance over the external diameter of the internally threaded sleeve (138) and whose diameter is smaller than that of the external flange (140),

f) in such a manner that after the securing of the fastening plates (130,144) the vertical spacing of the upper fastening plate from the lower one and thus the height of the table plate may be altered by rotating the internally threaded sleeve with respect to the externally threaded sleeve.

18. Office workstation as claimed in claim 17, characterised by the following features:

a) provided in the interior of the internally threaded sleeve (136) are vertical guides (152) for lugs (154), which extend downwardly from support arms (12) of the upper frame (10) and serve for fastening thereof to the lower frame (6),

b) the lugs may be slid into the guides (152) from above and may be fixed in position by fixing screws (156).

19. Office workstation as claimed in claim 1 or 18, characterised by the following features:

a) the upper frame (10, 47) has two support arms (12,48) whose lower ends are to be connected to the lower frame (6) through openings (28) in the table plate,

b) secured to the upper ends of the support arms is a carrier (13) which extends parallel to the table plate and which serves to mount attachments.

20. Office workstation as claimed in claim 19, characterised in that the support arms (12) describe a quarter circular arc.

21. Office workstation as claimed in claim 20, characterised in that secured to the carrier is a wall (16) forming a visual screen which extends downwardly, particularly to the floor. (Figures 1 and 2).

22. Office workstation as claimed in claim 1 or 18, characterised by the following features:

a) the carrier is a hollow beam (52) of elongate upright cross-section, in the use position,

b) on its one side surface the carrier has a longitudinal slit (53) of a width sufficient for passing cables through it,

c) the carrier defines a cable passage (54) in its interior below the height of the longitudinal slit.

23. Office workstation as claimed in claim 22, characterised by the following features:

a) at the top and bottom the carrier has a wall (55,56) with a part-cylindrical external surface,

b) undercuts (79,81) extending over the length of the hollow beam are provided on the edges of these external surfaces,

c) supports (77) for mounting additional components have jaws (82) complementary thereto.

24. Office workstation as claimed in claim 1 or 3, characterised by the following features:

a) the lower frame has a support (20) in the form of an upwardly open U on at least one narrow side,

b) a cover plate (34) with trough-like edge portions (36) may be joined to both sides of the support,

c) in such a manner that the space between the cover plates represents a cable compartment whose breadth between the cover plates is substantially larger than the breadth of the support.

**Revendications**

1. Place de travail de bureau comportant

a) un plateau de bureau (2) réglable en hauteur,

b) un bâti (6) dans lequel sont prévus des canaux de câbles, pour porter le plateau de bureau,

c) des éléments d'extension (50, 59, 60 etc..) du plateau de bureau,

d) des pièces accessoires (75, 76) qui, en cas de besoin, peuvent être placées au-dessus du plateau de bureau,

e) des ouvertures traversantes (28) à l'intérieur du plateau de bureau pour faire passer des câbles et pour monter des pièces accessoires,

caractérisée par ce qui suit :

f) le bâti possède des corps d'assemblage creux parallèlépipèdiques (18, 160) avec des ouvertures de passage relativement grandes dans leurs parois,

g) les corps d'assemblage servent au raccordement de montants verticaux (8, 20, 170), dans leur position d'utilisation, et de traverses creuses horizontales (22, 24, 116),

h) au lieu d'au moins un des deux coins avant, le plateau de bureau (2, 2') présente une arête oblique (44) d'une longueur d'au moins 30 cm, l'arête oblique servant à ajouter des plateaux d'extension (50, 59, 60),

i) conformément à l'arête obligque (44) du plateau de bureau, une des traverses creuses (24) est coudée de manière à présenter vers l'avant une extension qui s'étend vers l'extérieur vers l'avant et à peu près à angle droit par rapport à l'arête oblique qu'elle dépasse d'en dessous vers l'extérieure, et qui sert -en combinaison avec au moins un corps d'assemblage (18)- à porter des pièces d'extension,

j) au prolongement de la traverse creuse (24), on peut placer au-delà du corps d'assemblage (18) un morceau de traverse creuse supplémentaire (23) qui sert surtout de raccordement à une paroi.

(fig. 1 à 4)

2.    Place de travail de bureau selon la revendication 1, caractérisée en ce que l'arête oblique (44) s'étend à un angle d'environ 135 ° par rapport au bord avant (46) du plateau de bureau (2) et possède notamment une longueur d'environ 45 cm.

3.    Place de travail de bureau selon la revendication 1, caractérisée par ce qui suit :

a) les traverses creuses (22, 24, 116) forment une liaison arrière et latérale entre les montants,

b) les canaux de câbles s'étendent à travers les traverses creuses et les corps d'assemblage ainsi qu'à côté des montants (8, 20) à l'intérieur de tôles de couverture associées (32, 34),

c) les jambes (7) présentent chacune un montant (8) en forme d'un tube de section transversale rectangulaire,

d) des tôles de couverture (32), présentant une section transversale en forme de rigole, entourent les deux côtés du montant laissant un espace libre pour les câbles entre le montant et les tôles de couverture.

4.    Place de travail de bureau selon la revendication 1, caractérisée en ce que

a) une paroi verticale des traverses creuses (22, 23, 56, 116) présente un clapet (118) pouvant pivoter autour d'un axe horizontal, qui s'étend notamment sur presque toute la hauteur de la paroi,

b) et que le clapet (118) peut pivoter autour d'une articulation en deux parties dont une section d'articulation (119) est formée d'une pièce avec le clapet, l'autre d'une pièce avec la partie principale de la traverse creuse (116).

5.    Place de travail de bureau comportant

a) un plateau de bureau (2) réglable en hauteur,

b) un bâti (6) dans lequel des canaux de câbles sont prévus, pour porter le plateau de bureau,

c) des ouvertures traversantes (28) à l'intérieur du plateau de bureau pour passer des câbles et pour monter des pièces accessoires,

caractérisée par ce qui suit:

d) le bâti présente des corps d'assemblage creux, parallélépipèdiques (18, 160) avec des ouvertures de passage relativement grandes en ses parois,

e) les corps d'assemblage servent à raccorder des montants verticaux (8, 20) en position d'utilisation et des traverses creuses horizontales (22, 24, 116),

f) les corps d'assemblage (18) présentent une section horizontale essentiellement carrée,

g) les corps d'assemblage présentent à 45° par rapport à leur paroi latérale des surfaces en coin (113) étroites inclinées,

h) les plaques de couverture (90) et les plaques de liaison (88) présentent à leurs bords verticaux des brides (110) formées sur les bords qui sont inclinées à un angle de 135° par rapport aux plans principaux de ces plaques de manière à pouvoir s'appuyer contre les surfaces en coins,

i) deux brides (110) sont chaque fois séparées par des interstices de même hauteur,

j) les brides le long du bord vertical des plaques de couverture et de liaison sont décalées en hauteur par rapport à celles de l'autre bord vertical, de manière à ce que -lorsque le corps d'assemblage est ferméles brides de deux plaques forment à une des surfaces en coin une rangée fermée du haut vers le bas.

(fig. 11)

6.    Place de travail de bureau selon la revendication 5, caractérisée par ce qui suit :

a) des plaques de liaison (88) servent à la fixation du corps d'assemblage aux extrémités des traverses creuses,

b) des plaques de couverture (90) servent à fermer les côtés restant ouverts des corps d'assemblage.

7. Place de travail de bureau selon la revendication 5, caractérisée en ce que les ouvertures (108) dans les parois latérales des corps d'assemblage (18) présentent essentiellement les dimensions et la forme de la section transversale des canaux de câbles (96, 100) des traverses creuses (22).

8. Place de travail de bureau selon la revendication 5, caractérisée par ce qui suit :
   a) les brides (110) présentent chacune un trou pour les tiges filetées,
   b) les surfaces en coins présentent chacune une série verticale de perçages filetés (115) à intervalles adaptés.

9. Place de travail de bureau comportant :
   a) un plateau de bureau (2) réglable en hauteur,
   b) un bâti (6) dans lequel sont prévus des canaux de câbles, pour porter le plateau de bureau,
   c) des ouvertures (28) traversantes a l'intérieur du plateau de bureau pour passer des câbles et pour monter des pièces accessoires,
   caractérisée par ce qui suit :
   d) le bâti présente des corps d'interserction (160) creux parallèlépipèdiques avec des ouvertures de passage relativement grandes dans leurs parois,
   e) les corps d'assemblage servent au raccordement de montants verticaux (170) et de traverses creuses horizontales (116) en position d'utilisation,
   f) les corps d'assemblage (160) possèdent une section transversale horizontale essentiellement carrée,
   g) les corps d'assemblage (160) pouvant être composés de pièces diverses dont font partie :
   h) une plaque de fond (162) qui sert notamment de finition supérieure du montant (170) creux formé en section transversale en U, et qui présente une ouverture centrale (172) de dimensions correspondantes,
   i) une plaque de couverture (164) adaptée à la plaque de fond, qui porte une superstructure (188) en forme d'une tubulure pour l'insérer dans une ouverture (28) du plateau de bureau et présentant une ouverture centrale y adaptée,
   j) quatre parois latérales (166, 168) à placer entre la plaque de fond et la plaque de couverture qui, en position d'utilisation, sont en verticale,
   k) des parois latérales fermées (168) et des parois latérales (166) telles à former une ouverture des dimensions approximatives et de la forme d'un canal de câbles principal (96) et qui servent de plaques de liaison. (fig. 22)

10. Place de travail de bureau selon la revendication 9, caractérisée par ce qui suit :
    a) les bords latéraux (178) verticaux en position d'utilisation, des parois (166, 168) sont inclinées vers l'intérieur à un angle de 45°,
    b) dans les bords latéraux, des rainures verticales (190) pour entourer les tiges de boulons filetés (192) sont prévues par lesquels, après la pose des parois latérales, la plaque de couverture est à relier avec la plaque de fond.

11. Place de travail de bureau selon les revendications 9 ou 10, caractérisée par ce qui suit :
    a) les parois latérales (166, 168) présentent au bas des fentes (176) qui s'étendent vers le bas et vers l'intérieur lorsque le corps d'assemblage est assemblé,
    b) la plaque de fond (162) possède des sections de bord (174) dont les côtés supérieurs présentent des surfaces obliques adaptées s'étendant vers le haut et vers l'extérieur.

12. Place de travail de bureau selon les revendications 9 ou 10, caractérisée par ce qui suit :
    a) les bords de la plaque de couverture présentent des rebords d'emboîtement (184) dirigés vers le bas, en forme de crabots,
    b) les bords supérieurs des parois latérales présentent des échancrures (179) adaptées aux crabots.

13. Place de travail de bureau selon la revendication 12, caractérisée en ce que les crabots et les échancrures, dans leur position d'utilisation, présentent des surfaces extérieures essentiellement verticales et des surfaces intérieures s'étendant vers l'extérieur et vers le bas (surfaces de friction 186).

14. Place de travail de bureau selon la revendication 5, caractérisée en ce que les plaques de liaison (88) présentent une couronne de trous pour les tiges filetées et les faces frontales des parois des traverses creuses, des trous (102, 107) en disposition correspondante.

15. Place de travail de bureau selon les revendications 1 ou 3, caractérisée par ce qui suit :
    a) pour la fixation d'une traverse creuse (23) à une paroi, est prévue une plaque de contact de paroi (26) avec une couronne d'ouvertures filetées,

b) la plaque de contact de paroi a des surfaces en coin (113') étroites, inclinées à 135° par rapport à son plan principal, avec des ouvertures filetées (115') pour les brides (110) d'une plaque de liaison (88),

c) dans les surfaces en coin sont prévus des enfoncements plats (110v) pour recevoir chacun une bride (110) à visser.

16. Place de travail de bureau selon la revendication 3, caractérisée en ce que, pour la fixation du bâti (6) au plateau de bureau (2, 2'), sont prévus des dispositifs de réglage en hauteur (68) qui sont à monter en partie sur la face supérieure de chaque corps d'assemblage (18), en partie sur la face inférieure du plateau de bureau.

17. Place de travail de bureau selon la revendication 16, caractérisée par ce qui suit :

a) le dispositif de réglage en hauteur présente une plaque de fixation inférieure (130) à monter sur le corps d'assemblage (18) et une plaque de fixation supérieure (144) à monter sur le plateau de bureau,

b) sur la plaque de fixation inférieure, une douille (136) à filet extérieur est posée et dirigée vers le haut,

c) une douille (138) à filet intérieur correspondante peut être vissée sur la douille à filet extérieur pour le réglage en hauteur, et peut être insérée d'en bas dans une des ouvertures (28) du plateau de bureau,

d) la douille à filet intérieur présente une bride extérieure (140),

e) la plaque de fixation supérieure (144) présente une ouverture (46) circulaire qui, avec un certain jeu, peut être placée par dessus le diamètre extérieur de la douille à filet interieur (138) et dont le diamètre est inférieur à celui de la bride extérieure (140),

f) de manière à ce que, après le montage des plaques de fixation (130, 144), la distance en hauteur de la plaque de fixation supérieure par rapport à la plaque de fixation inférieure, et ainsi la hauteur du plateau de bureau, peuvent être variées lorsqu'on tourne la douille à filet intérieur par rapport à la douille à filet extérieur.

18. Place de travail de bureau selon la revendication 17, caractérisée par ce qui suit :

a) à l'intérieur de la douille à filet intérieur (136) des guidages (152) verticaux pour les brides (154) sont prévus, qui s'étendent vers le bas à partir de bras porteurs (12) de la superstructure (10) et qui servent à la fixation de cette dernière au bâti (6),

b) les brides peuvent être glissées en haut dans les guidages (152) et peuvent être serrées au moyen de vis de serrage (156).

19. Place de travail de bureau selon les revendications 1 à 18, caractérisée par ce qui suit :

a) la superstructure (10, 47) présente deux bras porteurs (12, 48) dont les extrémités inférieures doivent être raccordées à travers des ouvertures (28) du plateau du bureau avec le bâti (6),

b) aux extrémités supérieures des bras porteurs, un support (13) parallèle au plateau de bureau est fixé, qui sert de fixation à des pièces d'extension.

20. Place de travail de bureau selon la revendication 19, caractérisée en ce que les bras porteurs (12) décrivent un quart de cercle.

21. Place de travail de bureau selon la revendication 20, caractérisée en ce qu'une paroi (16) est fixée au support pour barrer la vue, qui -vers le bas- s'étend notamment jusqu'au sol.

22. Place de travail de bureau selon les revendications 1 ou 18, caractérisée par ce qui suit :

a) le support est une traverse creuse (52) d'une section allongée droite en position d'utilisation,

b) le support présente, sur une de ses faces latérales, une fente longitunale (53) d'une largeur suffisante pour passer des câbles,

c) le support forme, dans son intérieur audessous de la hauteur de la fente longitudinale, un canal de câbles (54).

23. Place de travail de bureau selon la revendication 22, caractérisée par ce qui suit :

a) le support présente en haut et en bas une paroi (55, 56) avec une surface extérieure partiellement cylindrique,

b) au bord de ces surfaces extérieurs sont prévues des dépouilles (79, 81) s'étendant sur la longueur de la traverse creuse,

c) des montants (77) pour le montage de pièces accessoires présentent des crabots (82) y correspondants.

24. Place de travail de bureau selon les revendications 1 ou 3, caractérisée par ce qui suit :

a) le bâti présente, au moins sur un de ses côtés étroits, un montant (20) sous forme d'un U ouvert vers le haut,

b) des deux côtés du montant, peut être montée une tôle de couverture (34) avec des sections de bord (36) en forme d'auge,
c) de manière à ce que l'espace entre les tôles de couverture représente une armoire à câbles dont la largeur entre les tôles de couverture est essentiellement plus grande que la largueur du montant.

FIG. 1

FIG. 2

FIG. 3

FIG. 4

FIG. 5

FIG. 6

FIG. 7

20

FIG.8

FIG.10

FIG.9

FIG.10a

FIG.11

FIG.12

FIG.13

FIG.15

FIG.14

FIG.16

FIG. 17

FIG.18

FIG.19

FIG.20

FIG.21

EP 0 297 400 B1

FIG.22

26

FIG.24

FIG. 23

FIG.25